Europäisches Patentamt

European Patent Office

Office européen des brevets

(19)

(11) Publication number : **0 674 927 A1**

(12) # EUROPEAN PATENT APPLICATION

(21) Application number : **95301886.8**

(22) Date of filing : **21.03.95**

(51) Int. Cl.⁶ : **A63F 9/00, A63F 9/22**

(30) Priority : **31.03.94 US 221115**

(43) Date of publication of application :
**04.10.95 Bulletin 95/40**

(84) Designated Contracting States :
**DE GB**

(71) Applicant : **AT & T Corp.**
**32 Avenue of the Americas**
**New York, NY 10013-2412 (US)**

(72) Inventor : **DeSimone, Joseph**
**409 Evergreen Avenue**
**Bradley Beach, New Jersey 07720 (US)**

(74) Representative : **Johnston, Kenneth Graham**
**AT&T (UK) LTD.**
**AT&T Intellectual Property Division**
**5 Mornington Road**
**Woodford Green Essex, IG8 OTU (GB)**

(54) **Electronic game utilizing bio-signals.**

(57)    An electronic game varies its level of difficulty in response to a bio-signal derived from a player. The bio-signal is indicative of the player's level of excitement. A game controller uses the bio-signal to adjust the game's level of difficulty so that the player is neither bored nor over challenged.

EP 0 674 927 A1

## Technical Field

The present invention relates to electronic games, and more specifically, using bio-signals to modify the game.

## Description of the Prior Art

In the past, electronic games varied the level of difficulty of the game based on a player completing a predefined set of actions or tasks within the game. Unfortunately, this often resulted in portions of the game being relatively boring for the player.

## Summary of the Invention

An embodiment of the present invention provides bio-signals to the electronic game which indicate the emotional state or level of excitement of the player. Using this information, the electronic game adjusts the level of difficulty to maintain the player's level of excitement or interest. For example, the level of difficulty may be adjusted in response to a signal that is indicative of the impedance between two points on the player's skin.

## Brief Description of the Drawings

FIG. 1 illustrates an electronic game that receives bio-signals from a bio-monitor;
FIG. 2 illustrates a bio-signal produced by the bio-monitor of FIG. 1;
FIG. 3 illustrates a circuit within the bio-monitor;
FIG. 4 illustrates a circuit for measuring the time between the ramps that compose a bio-signal;
FIG. 5 illustrates an alternative circuit for measuring the time between ramps that compose a bio-signal; and
FIG. 6 is a flow chart of commands executed by the game controller which executes the electronic game program.

## Detailed Description

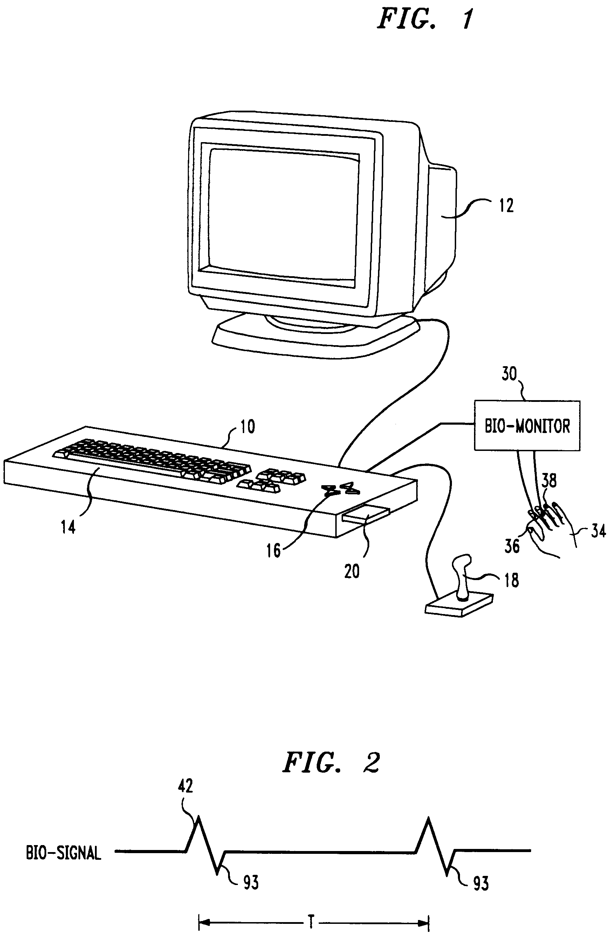

FIG. 1 illustrates electronic game module 10 that contains the game controller, microprocessor or microcomputer which executes the electronic game software, responds to the player's input, and displays the video associated with the game on monitor or television 12. When used with a virtual reality electronic game, it is possible to replace monitor 12 with a helmet or goggles that display video images to the player or players. Electronic game module 10 receives player input from several sources. The player may enter commands into electronic game module 10 via keyboard 14, cursor control buttons 16 or joy stick 18. If the game software permits several players to use the game simultaneously, several player input devices are provided. It is also possible for a player to use an electronic glove or wireless control device to communicate with electronic game module 10. Electronic game module 10 may receive game programs or software using plug-in cartridge 20. Plug-in cartridge 20 can be in a form such as a read only memory, magnetic disk or a compact disc. Electronic module 10 may also receive game programs via a communication link such as a telephone or cable television network. It is also possible for the game controller, which executes the game software, to be remotely located so that it communicates with the player(s) and/or provides video images using a communication link such as a telephone network, a cable television network, a wireless communication channel or an optical communication channel.

Bio-monitor 30 provides a bio-signal as an input to electronic game module 10. Bio-monitor 30 may be co-located with the game controller or may be included within electronic game module 10. The bio-signal from bio-monitor 30 is indicative of the impedance between two points on the surface of player 34's skin. Bio-monitor 30 measures the impedance using contact 36 which is attached to one of the player's fingers and contact 38 which is attached to another of the player's fingers. It is also possible to attach the contacts to other positions on the user's skin. The contacts used by bio-monitor 30 may also be imbedded in the handle ofjoy stick 18 or in an electronic glove which the player uses to interface with the game. When user 34 becomes excited or anxious, the impedance between points 36 and 38 decreases and the decrease is detected by monitor 30 which produces a bio-signal indicative of a decreased impedance. A bio-monitor such as a bio-feedback monitor sold by Radio Shack, which is a division of Tandy Corporation, under the trade name (MICRONATA® BIOFEEDBACK MONITOR) model number 63-664 may be used as bio-monitor 30. It is also possible to use other bio-monitors from other sources such as the "Professional G.S.R." model P.976 sold by Biofeedback Instrument Co.

Electronic game module 10 uses the bio-signal from bio-monitor 30 to monitor player 34's level of excitement. If the player's level of excitement decreases, the game controller within electronic module 10 increases the level of difficulty of the game to increase the player's level of excitement. This can be accomplished by increasing the speed of the game, and/or by increasing the complexity of tasks, obstacles or challenges presented to the player and/or by increasing the number of tasks, obstacles or challenges that the player must overcome while playing the game. It is possible to vary the total number of tasks, obstacles or challenges presented to the player during the game, and/or the number of tasks, obstacles or challenges presented to the player at one time. When the bio-signal indicates that the player's level of excitement is increasing because the level of play is becoming too difficult for the player, the controller within electronic game module 10 decreases the level of difficulty of the game by decreasing the speed of the game and/or by decreasing the complexity of the tasks, obstacles or challenges presented to the player and/or by decreasing the number of obstacles or challenges that the player must overcome.

When bio-monitor 30 is the above-referenced monitor available from Radio Shack, the bio-signal is in the form of a series of ramp-like signals, where each ramp is approximately 0.2msec. in duration. FIG.2 illustrates the bio-signal, where a series of ramp-like signals 42 are separated by a time T. The amount of time T between ramps 42 relates to the impedance between points 38 and 36. When the user is in a more excited state, the impedance between points 38 and 36 is decreased and time T is decreased. When the user is in a less excited state, the impedance between points 38 and 36 is increased and the time T is increased.

The form of a bio-signal from a bio-monitor can be in forms other than a series of ramp-like signals. For example, the bio-signal can be an analog signal that varies in periodicity, amplitude and/or frequency based on measurements made by the bio-monitor, or it can be a digital value based on conditions measured by the bio-monitor.

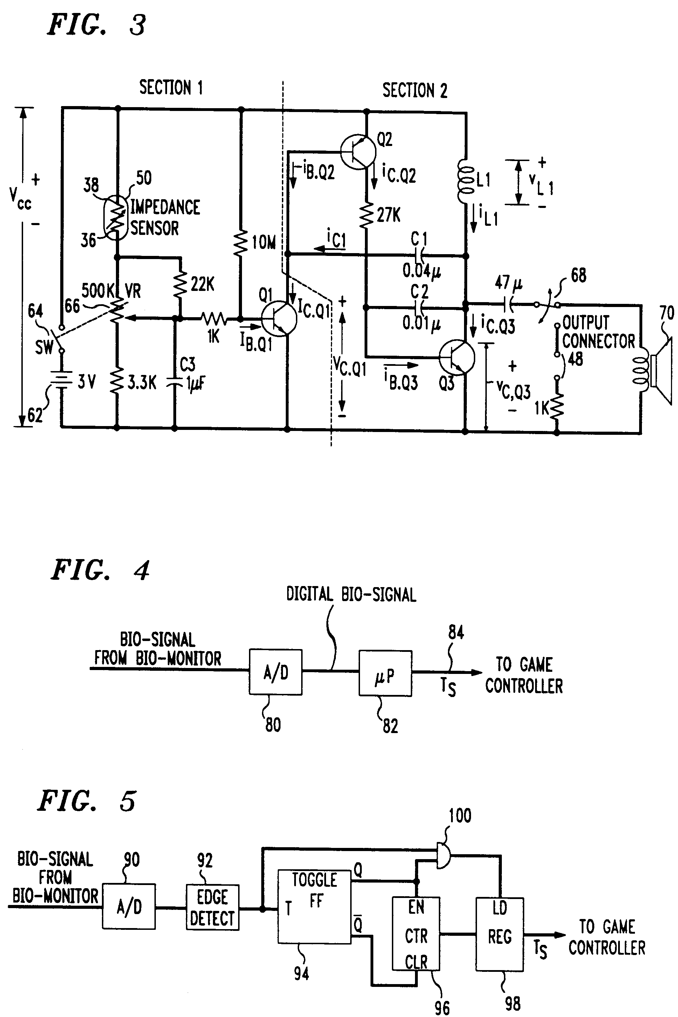

Bio-monitor 30 contains the circuit of FIG. 3 which produces the bio-signal that indicates the impedance between points 38 and 36. The circuit consists of two sections. The first section is used to sense the impedance between contacts 38 and 36, and the second section acts as an oscillator to produce a series of ramp signals at output connector 48, where the frequency of oscillation is controlled by the first section.

The first section controls the collector current $I_{c,Q1}$ and voltage $V_{c,Q1}$ of transistor Q1 based on the impedance between contacts 38 and 36. In this embodiment, impedance sensor 50 is simply contacts 38 and 36 positioned on the player's skin. Since the impedance between contacts 38 and 36 changes relatively slowly in comparison to the oscillation frequency of section 2, the collector current $I_{c,Q1}$ and voltage $V_{c,Q1}$ are virtually constant as far as section 2 is concerned. The capacitor C3 further stabilizes these currents and voltages.

Section 2 acts as an oscillator. The reactive components, L1 and C1, turn transistor Q3 on and off to produce an oscillation. When the power is first turned on, $I_{c,Q1}$ turns on Q2 by drawing base current $I_{b,Q2}$. Similarly, $I_{c,Q2}$ turns on transistor Q3 by providing base current $I_{b,Q3}$. Initially there is no current through inductor L1. When Q3 is turned on, the voltage Vcc less a small saturated transistor voltage $V_{ce,Q3}$, is applied across L1. As a result, the current $I_{L1}$ increases

in accordance with $L\dfrac{dI_{L1}}{dt} = V_{L1}$. As current $I_{L1}$ increases, current $I_{c1}$ through capacitor C1 increases. Increasing the current $I_{c1}$ reduces the base current $I_{B,Q2}$ from transistor Q2 because current $I_{c,Q1}$ is virtually constant. This in turn reduces currents $I_{c,Q2}$, $I_{b,Q3}$ and $I_{c,Q3}$. As a result, more of current $I_{L1}$ passes through capacitor C1 and further reduces current $I_{c,Q3}$. This feedback causes transistor Q3 to be turned off. Eventually, capacitor C1 is fully charged and currents $I_{L1}$ and $I_{c1}$ drop to zero, and thereby permit current $I_{c,Q1}$ to once again draw base current $I_{b,Q2}$ and turn on transistors Q2 and Q3 which restarts the oscillation cycle.

Current $I_{c,Q1}$, which depends on the impedance between contacts 38 and 36, controls the frequency on duty cycle of the output signal. As the impedance between points 38 and 36 decreases, the time T between ramp signals decreases, and as the impedance between points 38 and 36 increases, the time T between ramp signals increases.

The circuit is powered by three-volt battery source 62 which is connected to the circuit via switch 64. Also included is variable resistor 66 which is used to set an operating point for the circuit. It is desirable to set variable resistor 66 at a position that is approximately in the middle of its range of adjustability. The circuit then varies from this operating point as described earlier based on the impedance between points 38 and 36. The circuit also includes switch 68 and speaker 70. When a mating connector is not inserted into connector 48, switch 68 provides the circuit's output to speaker 70 rather than connector 48. The bio-signal is provided to the game controller via connector 48.

It is also possible to monitor bio-signals other than a signal indicative of the impedance between two points on a player's skin. Signals indicative of autonomic activity may be used as bio-signals. Signals indicative of player autonomic activity such as blood pressure, pulse rate, brain wave or other electrical activity, pupil size, skin temperature, transparency or reflectivity to a particular electromagnetic wavelength or other signals indicative of the player's emotional state may be used.

FIG. 4 illustrates a circuit that can be used by the microprocessor to monitor the time between ramps 42 of the bio-signal from bio-monitor 30. Analog-to-Digital (A/D) converter 30 converts the bio-signal from bio-monitor 30 into a digital bio-signal. Microprocessor 82 measures the time between the ramps of the digital bio-signal and provides those time measurements at output 84. The game controller, which executes the game software, periodically reads the time measurement available on output 84 via the game controller's databus.

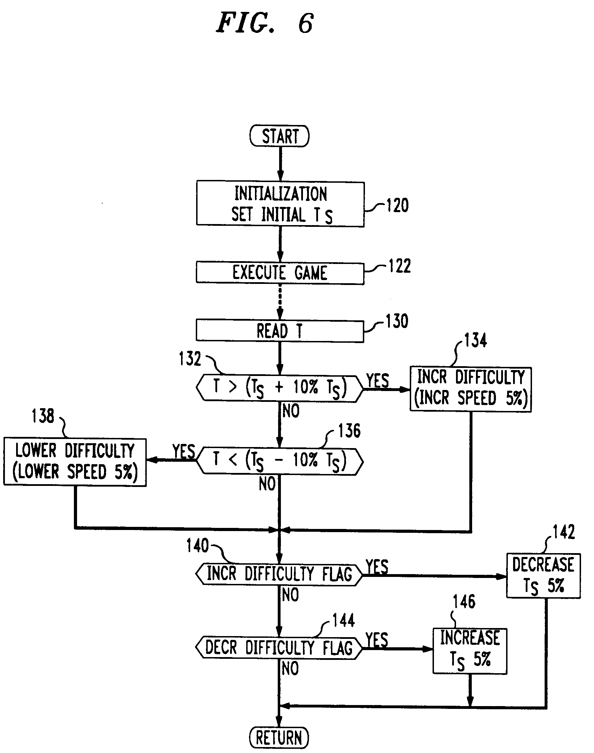

FIG. 5 illustrates an alternative circuit to measure the time between ramps 42 of the bio-signal from bio-monitor 30. This circuit offers the advantage of using cheaper components by eliminating the need for microprocessor 82. The bio-signal from bio-monitor 30 is received by A/D converter 90. The digitized bio-signal is passed to edge detector 92. Edge detector 92 detects, for example, edge 93; however any of the edges can be chosen for detection. Edge detect circuits are well known in the art and can be used to detect edges above or below a voltage level, where the edge may have either a positive or negative slope. The output of edge detector 92 is passed to toggle flip/flop 94 which switches between two states whenever an edge is detected by edge detector 92. The outputs of toggle flip/flop 94 are used to control counter 96. When in a first state, output Q of toggle flip/flop 94 is in a high state and enables counter 96 to count. When toggle flip/flop 94 is in its second state, output $\overline{Q}$ is in a high state and clears counter 96. The output of counter 96 is captured by register 98 which provides a count that indicates the time between the ramps of the bio-signal to the game controller. Register 98 is loaded after counter 96 has completed the count indicating the time between two consecutive ramp signals of the bio-signal. Register 98 is loaded with the count from counter 96 using AND gate 100. Gate 100 enables register 98 when the Q output from toggle flip/flop 94 is high and when edge detector 92 has detected edge 93 of bio-signal ramp 42. After register 98 is loaded, the signal from edge detector 92 causes toggle flip/flop 94 to change states, and thereby disables and clears counter 96. The Q output changing to a low state disables counter 96, and the $\overline{Q}$ output changing to a high state clears counter 96. The output from register 98 is read in a conventional manner using the data bus of the game controller.

FIG. 6 is a flow chart illustrating the program executed by the game controller, microprocessor, microcomputer or computer which executes the game software. When the game is first turned on, initialization step 120 is executed. During this step, the initialization required by the particular game is executed and an initial value for the time T between consecutive ramps of the bio-signal is obtained. The variable $T_s$ is set equal to the time T obtained in step 120. In step 122, the game controller executes the game software in a conventional fashion. While executing the game software in step 122, the game controller periodically executes commands beginning at step 130 to read the time T between ramps of the bio-signal, and to make adjustments to the game's level of difficulty as necessary. These commands can be executed based on an interrupt generated by a timer. For example the timer may be programmed to generate an interrupt every five seconds.

In step 130, the game controller inputs the value of T provided by microprocessor 82 or register 98. In step 132, the game controller determines if the value T obtained from step 130 is greater than $(T_s + 0.1T_s)$.

If the new value of T is greater than $(T_s + 0.1 T_s)$, in step 134 the game controller increases the difficulty level of the game. For example, the difficulty level of the game may be increased by increasing the speed of the game by 5%. If T is not greater than $(T_s +0.1 T_s)$, step 136 is executed. In step 136, the game controller determines if the value of T is less than the value of $(T_s -0.1T_s)$. If the value of T is less than $(T_s -0.1T_s)$, step 138 is used to decrease the difficulty of the game. For example, the difficulty level of the game may be decreased by decreasing the speed of the game by 5%. After executing step 138, or if the value of T is not less than $(T_s-0.1T_s)$, step 140 is executed. In step 140, it is determined if an increase difficulty flag was set by the player pressing an increase difficulty button on keypad 14. If the increase flag is set, step 142 is executed which clears the flag and decreases the value of $T_s$ by 5%; this results in the difficulty of the game being increased the next time the game controller passes through this interrupt routine. After executing step 142, the game controller returns to step 122 to continue executing the game software. In step 140, if it is determined that the increase difficulty flag is not set, step 144 is executed. In step 144, if it is determined that the decrease difficulty flag was set by the player activating a decrease difficulty button, step 146 is executed. In step 146, the decrease difficulty flag is cleared and the value of $T_s$ is increased by 5%; this results in a decrease in the game's difficulty the next time that the game controller executes this interrupt routine. After executing step 146, the game controller returns to step 122 to continue executing the game software. If, during step 144 it is determined that the increase difficulty flag was not set, the game controller returns to step 122 to continue execution of the game software.

It is also possible to execute the commands that control game difficulty and monitor the value of T as a loop that is executed as part of the game software in step 122. It is also possible to separate the steps that measure the value of T and adjust the game difficulty (steps 130-138), from the steps that respond to flags that are set when the player presses an increase or decrease difficulty button (steps 140-144). In this arrangement, steps 130-138 may be executed based on an interrupt generated by a timer, and steps 140-144 may be executed based on an interrupt generated by the player pressing a button on keyboard 14. In either case, the amount of time required to perform these tasks is insignificant with respect to the rest of the game software and can be executed at any convenient time.

It is also possible to eliminate most of the circuitry of FIGs. 4 and 5 if the game processor has sufficient time to directly monitor the output of an A/D that digitizes the bio-signal from bio-monitor 30. In this situation, the game microprocessor will also perform the function of microprocessor 82 in FIG. 4.

## Claims

1. An electronic game for use by at least one player (34), CHARACTERIZED BY:

   bio-monitor means (30) for producing a bio-signal derived from the player (34); and

   a game controller responsive to said bio-signal.

2. The electronic game of claim 1, CHARACTERIZED IN THAT said game controller varies a level of difficulty of the electronic game in response to said bio-signal.

3. The electronic game of claim 2, CHARACTERIZED IN THAT said game controller varies a speed of the game based on said bio-signal.

4. The electronic game of claim 2, CHARACTERIZED IN THAT said game controller varies a number n based on said bio-signal, where n is a number of obstacles in a plurality of obstacles.

5. The electronic game of claim 1, CHARACTERIZED IN THAT said bio-signal is related to the player's emotional state.

6. The electronic game of claim 1, CHARACTERIZED IN THAT said bio-signal is related to impedance between points on the player's skin.

7. A method for playing an electronic game involving at least one player, CHARACTERIZED BY the steps of:

   obtaining a bio-signal derived from the player; and

   modifying the electronic game in response to said bio-signal.

8. The method of claim 7, CHARACTERIZED IN THAT said step of modifying the electronic game comprises varying a level of difficulty of the electronic game in response to said bio-signal.

9. The method of claim 8, CHARACTERIZED IN THAT said step of varying a level of difficulty of the electronic game comprises varying a speed of the game based on said bio-signal.

10. The method of claim 8, CHARACTERIZED IN THAT said step of varying a level of difficulty of the electronic game comprises varying a number n based on said bio-signal, where n is a number of obstacles in a plurality of obstacles.

11. The method of claim 7, CHARACTERIZED IN THAT said step of obtaining a bio-signal derived from the player comprises obtain a bio-signal related to the player's emotional state.

FIG. 1

FIG. 2

*FIG. 3*

SECTION 1 | SECTION 2

*FIG. 4*

DIGITAL BIO-SIGNAL

BIO-SIGNAL
FROM BIO-MONITOR → | A/D | → | μP | → $T_S$ → TO GAME CONTROLLER

84

80            82

*FIG. 5*

100

BIO-SIGNAL
FROM
BIO-MONITOR → | A/D | → | EDGE DETECT | → | TOGGLE FF  T | Q / Q̄ → | EN CTR CLR | → | LD REG | → $T_S$ → TO GAME CONTROLLER

90      92              94           96        98

## FIG. 6

START

INITIALIZATION
SET INITIAL $T_S$ —120

EXECUTE GAME —122

READ T —130

132 — $T > (T_S + 10\% \ T_S)$ — YES → INCR DIFFICULTY (INCR SPEED 5%) —134

NO

138 — LOWER DIFFICULTY (LOWER SPEED 5%) ← YES — $T < (T_S - 10\% \ T_S)$ —136

NO

140 — INCR DIFFICULTY FLAG — YES → DECREASE $T_S$ 5% —142

NO

144 — DECR DIFFICULTY FLAG — YES → INCREASE $T_S$ 5% —146

NO

RETURN

EP 0 674 927 A1

**European Patent Office**

# EUROPEAN SEARCH REPORT

Application Number

EP 95 30 1886

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US-A-4 683 891 (CORNELLIER ET AL.)<br>* column 4, line 41 - line 55 *<br>* column 5, line 67 - column 6, line 4 *<br>--- | 1-11 | A63F9/00<br>A63F9/22 |
| Y | US-A-5 209 494 (SPECTOR)<br>* claims 1-4 *<br>--- | 1-11 | |
| A | US-A-4 285 517 (GLASS)<br>* column 1, line 27 - line 30; claim 1 *<br>--- | 1,2,7,8 | |
| A | US-A-4 643 421 (MEYER ET AL.)<br>* column 6, line 42 - line 51 *<br>--- | 1-3,7-9 | |
| A | US-A-4 856 777 (TOMY KOGYO)<br>* column 3, line 66 - column 4, line 4 *<br>--- | 4,10 | |
| A | US-A-4 358 118 (PLAPP)<br>* claim 1 *<br>--- | 1,5-7,11 | |
| P,A | US-A-5 377 100 (POPE ET AL.)<br>* claim 1 *<br>----- | 1,7 | |

| | | | TECHNICAL FIELDS SEARCHED (Int.Cl.6) |
|---|---|---|---|
| | | | A63F<br>A61B |

The present search report has been drawn up for all claims

| Place of search | Date of completion of the search | Examiner |
|---|---|---|
| THE HAGUE | 12 July 1995 | Glas, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9